# EUROPEAN PATENT SPECIFICATION

(11) **EP 2 994 275 B1**
(45) Date of publication and mention of the grant of the patent: **02.08.2017**
(21) Application number: 14731038.7
(22) Date of filing: 06.05.2014
(51) Int. Cl.: B25J 19/02

(54) **VISION APPLIANCE FOR ROBOTS**
SICHTGERÄT FÜR ROBOTER
ÉQUIPEMENT DE VISION POUR LES ROBOTS

(30) Priority: 10.05.2013 IT MO20130125
(43) Date of publication of application: 16.03.2016
(73) Proprietor: SIR S.P.A., 41122 Modena (IT)
(72) Inventor: PASSONI, Luciano, 41122 Modena (IT)
(74) Representative: Luppi, Emanuele
(86) International application number: PCT/IB2014/061231
(87) International publication number: WO 2014/181246

(56) References cited:
- EP-A1- 2 511 055
- EP-A2- 0 537 923
- US-A- 5 602 967
- US-A1- 2008 163 403
- US-A1- 2010 298 978

## Description

### Technical Field

The present invention relates to a vision appliance for industrial robots.

### Background Art

Industrial robots for de-palletizing, e.g. of the anthropomorphic type, are known which are equipped with a jointed arm which supports a grip means, in correspondence of its distal extremity.

The grip means are often of the suction type, substantially plate-shaped, and are arranged to pick up an entire layer of products at a time from the pallet.

Each layer is placed by the robot on a support, such as a pallet.

A major limitation of this solution is the fact that it does not allow to pick up individual products.

Therefore, the layer removed by the robot must be fractionated manually by personnel in charge, so that the different products can be sent to their respective destinations.

This system is very slow, inefficient and very expensive mainly because of the necessity of the use of labor.

Nevertheless, it continues to be used for the following reasons.

The products are distributed and arranged in the respective layers in different positions and directions depending on their size, number and size of the pallet. Furthermore, for space reasons, they are placed adjacent to one another, within the same layer.

Consequently, the layers of different pallets, and eventually different layers of the same pallet, may have a different configuration, that is to say that they may comprise products arranged in a different way from those of other layers or other pallets.

Therefore, even the conventional industrial robots that comprise grip means able to grip the individual product, e.g. of the gripper type, are not usable to de-palletize products individually, since the control unit to which these means are subject is not informed about the specific arrangement of products within the respective layers.

Consequently, this unit can not control the robot so as to be able to take the product in the correct manner, and to pick it up without damaging or arranging other products badly.

To solve this problem, robots have been provided which are equipped with vision means, such as cameras, e.g. mounted on grippers.

This solution may work in part for certain types of products, but also has at least two drawbacks.

First, it is not suitable for use for single-product pallets of shrink-wrapped packs of plastic bottles. Indeed, this is not able to detect in a satisfactory way the arrangement of the shrink-wrapped packs of bottles in one layer of the pallet, because the shrink fllm, that wraps the bottles is the related shrink-wrapped packs, produces reflections and shadows that prevent to effectively distinguish the boundary between a shrink-wrapped pack and another.

In addition, the dimensions of said vision means prevents the use of this known solution for transferring products between different pallets, which is instead a need currently felt in the logistics industry serving large retail chains.

In fact, it happens frequently that on destination pallets are formed walls of products, made up, in practice, of a stack of products that protrudes upward into the pallet.

The products subsequently loaded on the destination pallet must often be placed adjacent to one of these walls, and this can not be done by a robot that carriers the vision means described above, because these, due to their dimensions, would eventually bump the wall and drop to the ground the products already loaded.

A special robot system with a vision appliance as in the preamble of claim 1 is disclosed in document EP 2 511 055.

### Description of the Invention

The main aim of the present invention is to provide a vision appliance for industrial robots that allows to detect the individual arrangement of the products comprised in one of the layers of a pallet.

Within this aim, one object of the present invention is to provide a vision appliance for industrial robots which allows to palletize (and in particular re-palletize) products on a destination pallet, also when walls of products have formed on this.

Another object of the present invention is to provide a vision appliance for industrial robots which allows to overcome the above mentioned drawbacks of the prior art in the ambit of a simple, national, easy and effective to use as well as low cost solution.

The objects described above are achieved by the present vision appliance for industrial robots according to claim 1.

### Brief Description of the Drawings

Other characteristics and advantages of the present invention will become evident from the description of a preferred, but not exclusive, embodiment of a vision appliance for industrial robots, illustrated by way of an indicative, but not limitative, example in the accompanying drawings in which:
Figure 1 is a side view of a robot that mounts the vision appliance according to the invention;
Figure 2 is a top plan view of the vision appliance according to the invention;
Figure 3 is a side view of the vision appliance according to the invention, wherein the vision unit is in its rest position;
Figure 4 is a side view of the vision appliance according to the invention, wherein the vision unit is in its work position;
Figure 5 is a side view of said robot, when the appliance is used on source pallets;
Figure 6 is the detail K of the previous figure;
Figure 7 is a view from below of the appliance according to the invention; and
Figure 8 is a side view of the robot, while it is used to load a shrink-wrapped pack on a destination pallet.

### Embodiment of the Invention

With reference to these figures, globally indicated by 1 is the vision appliance of the invention.

The invention has been devised for use with an industrial robot, in particular of the anthropomorphic type, equipped with at least three (but preferably six) degrees of freedom, and comprising a jointed arm indicatively represented in the figures by its distal joint 2.

In detail, the appliance 1 may be fixed in correspondence of the distal extremity of the arm, in this case to said joint 2.

This fixing can be implemented by means of releasable fastening means, such as bolts or the like (as in the example shown in the figures), or by means of an automatic tool-changing device for robots.

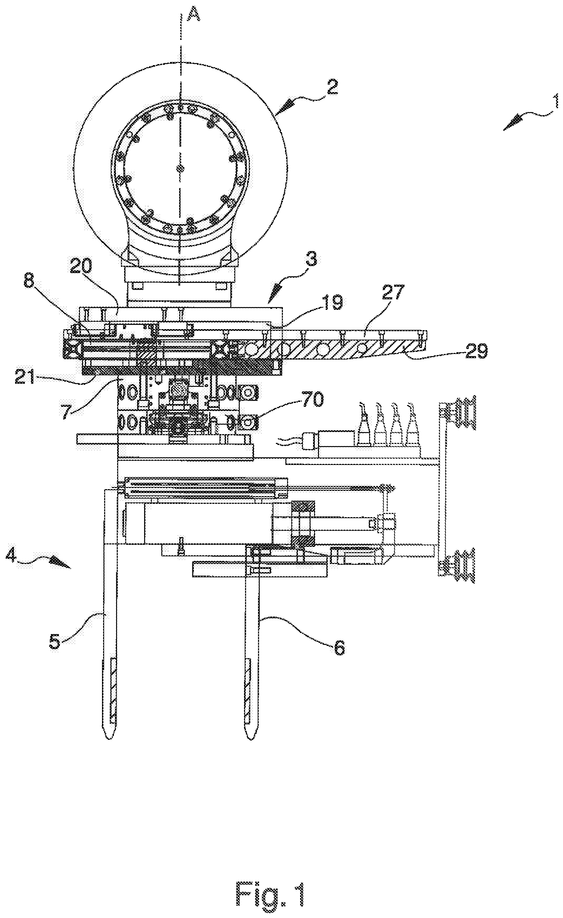

At any rate, as shown in Figure 1, the proposed appliance 1 comprises firstly a supporting frame 3, which is the part that can be fixed to the jointed arm 2 and able to support a grip means 4.

In particular, the invention is especially intended to support a pneumatically operated gripper 4 for robots, e.g. of the type having a fixed jaw 5 and a movable jaw 6.

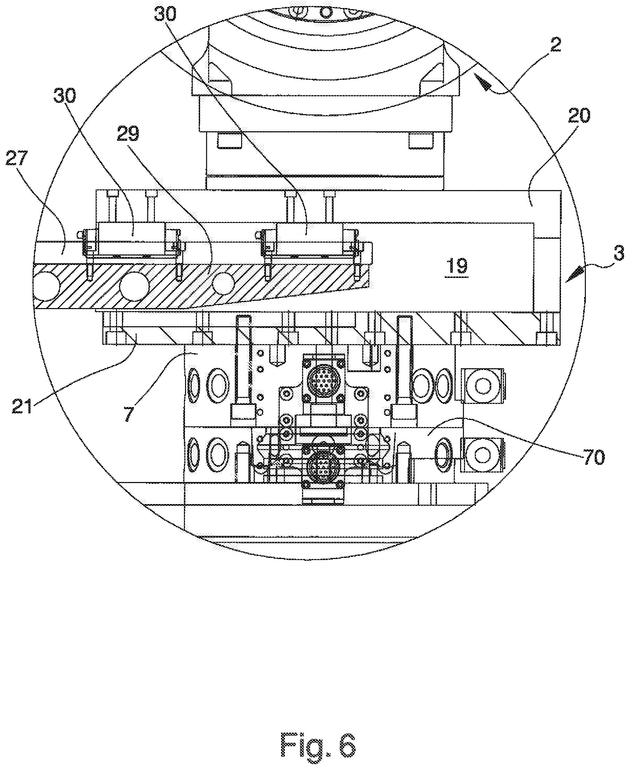

In detail, the proposed appliance 1 may provide, fixed below the frame 3 and interposed between this and the gripper 4, an automatic tool-changing device 7, 70 for robots (shown in detail in Figure 6).

The automatic tool-changing devices are well known in the industry and are generally composed of two coupling devices 7, 70, often with a substantially discoid shape, each fixed to one of the two components intended to be joined, configured in such a way to attach the components in a releasable way, and to (also) connect the distal component both to the operating means (e.g. of the pneumatic or hydraulic type) and to the electronic control unit of the robot, thanks to suitable electronic connectors equipped with usual pins or other similar systems.

In the configuration shown in the enclosed drawings, the gripper 4 represents the true end effector of the robot 2, where the appliance 1 of the invention is incorporated in the distal portion of the jointed arm 2.

However, alternative configurations are possible.

Preferably, the joint 2, the appliance 1 and the gripper 4 extend along an axis A which, in use, is arranged vertically.

Below, for illustrative convenience, we will refer to the set composed of joint 2, appliance 1 and gripper 4 as a robot vision and handling operating group.

The invention, in its broader aspects, comprises a lighting device 8, carried by the frame 3 and an image acquisition device 9, directly supported by the lighting device 8, to define a vision unit 8, 9.

In detail, the acquisition device 9, which may be a camera or a film camera, is fixed to the lighting device 8 with a direction such as to "see" (i.e., acquire images of) an area illuminated by the lighting device 8.

Preferably, the acquisition device 9 is mounted on board of the lighting device 8, in a manner best explained later.

According to an important aspect of the invention, the lighting device 8 is retractably mounted on the frame 3.

In particular, in the preferred embodiment of the invention, the lighting device 8 (and, in more detail, the vision unit 8, 9) is movable between a work position, in which it protrudes, substantially cantilevered, from frame 3, and a rest retracted position.

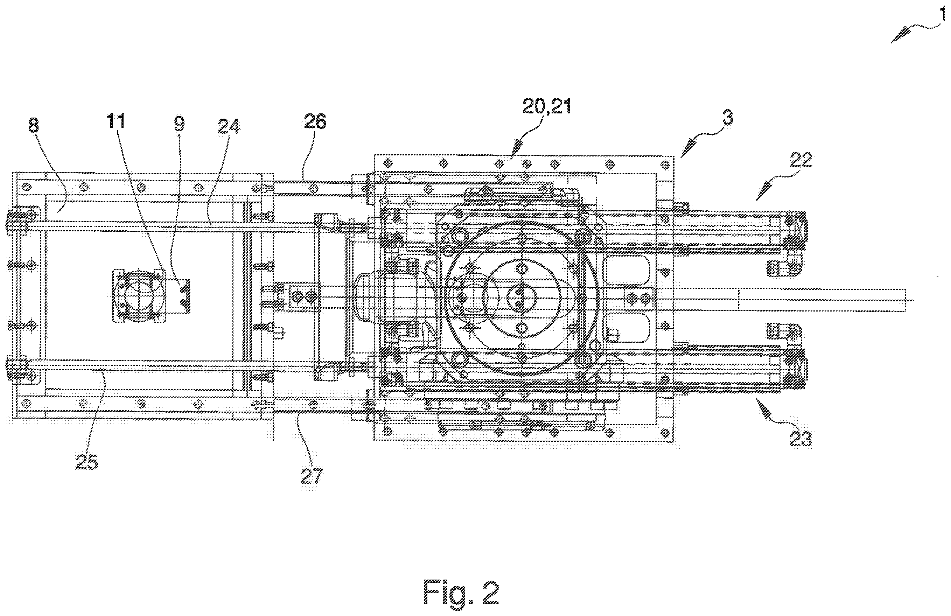

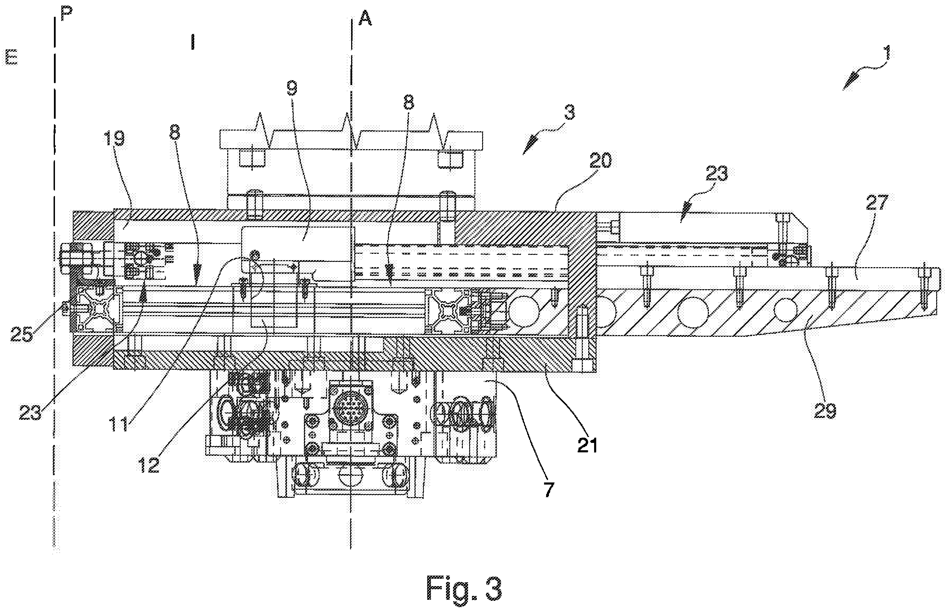

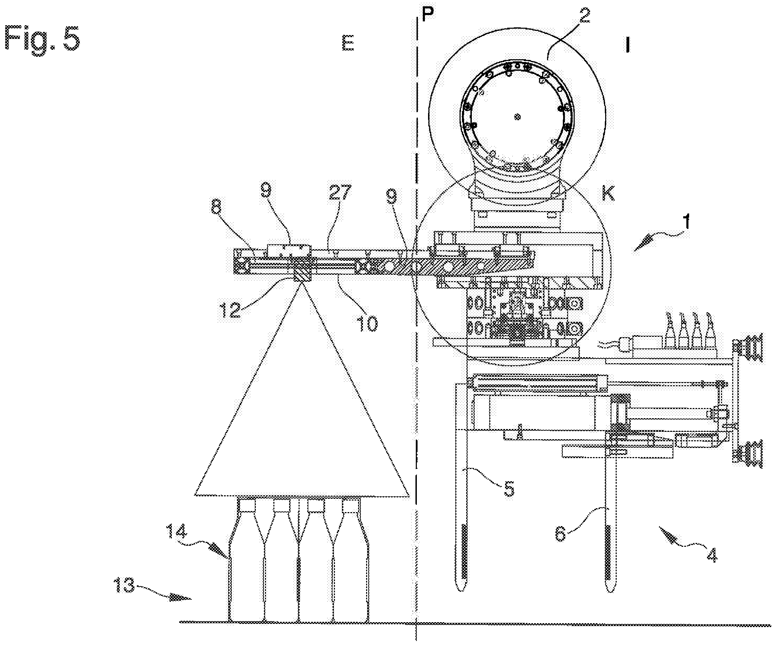

To be precise, when the vision unit is in the work position (the condition shown in Figures 2, 4, 5 and 6), the appliance 1 has its maximum perimeter dimensions, while when it is in its rest position, it defines the minimum perimeter dimensions of the appliance 1 (see Figures 1, 3 and 7).

Note that the expression "cantilevered" identifies the position of the vision unit 8, 9 when the aforementioned operating group 2, 1, 4 is in the arrangement of use, wherein said axis A is arranged vertically.

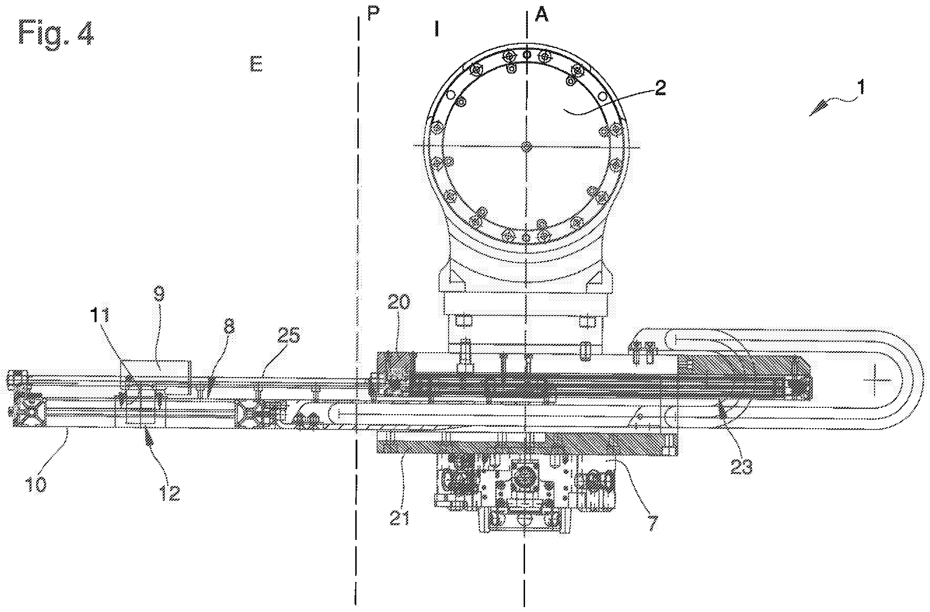

In particular, in its work position, the vision unit 8, 9 protrudes cantilevered from the whole operating group 1, 2, 4, and in detail it is arranged in an external half-space E defined by a front plane P parallel to the axis A of the operating group, while in the rest position it is placed in the other half-space I, i.e. the internal one (see in particular Figure 4).

In the remainder of the present description, for reasons of clarity of explanation, the parts of the operating group 2, 1, 4, or of other entities specified below, which are facing or at least close to the above mentioned plane P, will be characterized by the adjective "front" or "frontal"; e.g., the jaw 5 facing to the plane P, will hereinafter be called "front jaw" 5.

The opposing parts, further from the front plane P, will be referred to as "rear". In the preferred embodiment of the invention, the lighting device comprises at least one luminous panel 8, e.g. of quadrangular shape, having a luminous face 10, from which is emitted the light produced by it.

When the vision unit 8,9 is in the work position and the operating group 1, 2, 4 is in the arrangement of use, then the luminous face 10 is facing downwards, and therefore also the acquisition device 9 must be directed so as to take the objects placed below.

For this purpose, the panel 8 can comprise a seat 11 to accommodate the acquisition device 9, which is preferably a through housing able to receive the lens 12 of the camera or film camera.

This measure allows to contain the overall dimensions of the vision unit 8, 9, because this has a substantially planar extension, with perimeter dimensions only defined by those of the luminous panel 8.

Advantageously, the seat 11 may be arranged in the panel 8 in a central position, the latter thus having a substantially annular shape.

The luminous panels are known *per se*, though not in combination with the other components of the invention, and may include a plurality of LED lamps, substantially coplanar and evenly distributed.

Before describing further constructive and functional aspects of the invention, the operation of the proposed appliance 1 is explained, by referring, for convenience of explanation, to its preferred embodiment and its use for de-palletizing (and possibly re-palletizing) shrink-wrapped packs of plastic bottles. The shrink-wrapped packs 14 to be picked up are presented on a source pallet, in a top layer 13, accessible from above.

The robot is operated so as to bring its operating group 1, 2, 4 at the pallet, substantially above the top layer 13, in the aforesaid arrangement of use. Initially, the vision unit 8, 9 is in the rest configuration shown e.g. in Figure 1. Then, the unit 8, 9 is operated (through the means explained below) so as to protrude frontally beyond the vertical plane P up to the work position.

In this situation, the luminous panel 8 and the camera 9 protrude, preferably entirely, with respect to the group 1, 2, 4 and are located directly facing to said top layer 13, without the interposition of any shielding.

In particular, the panel 8 is arranged horizontally, parallel to the top layer 13, with the above luminous face 10 placed in front of the layer 13.

In this case, clearly, the lens 12 of the camera 9 is pointed towards the layer 13 of shrink-wrapped packs.

At this point the panel 8 and the camera 9 are activated in such a way to illuminate, respectively, the layer 13 from above and to take the upper face of the shrink-wrapped packs, which is struck by the light.

Especially in the case where the lens 12 of the camera 9 is arranged centrally with respect to the panel 8, given that the light projected from this strikes the top of the shrink-wrapped packs 14, according to a multiplicity of angles, starting from different points of origin evenly distributed all around the lens 12, then the image taken by the latter does not have any reflections and shadows which can distort the boundaries between a shrink-wrapped pack 14 and the other.

Consequently, using special computer programs able to process the images, the processing unit of the robot is able to detect the arrangement and mutual direction of the shrink-wrapped packs 14 of the layer.

In this manner, this unit can then control the jointed arm 2 and the gripper 4 in order to pick up a shrink-wrapped pack 14 at a time from the layer 13.

At this point, the vision unit 8, 9 can return to its rest position.

The operating group 1, 2, 4, after picking up the shrink-wrapped pack 14, can approach the destination pallet 15.

Advantageously, the robot mounting the appliance 1 of the invention can place the picked up shrink-wrapped pack 14 in a loading position in the destination pallet 15 that is adjacent to a wall of products 16, which was referred to in the description of the background art.

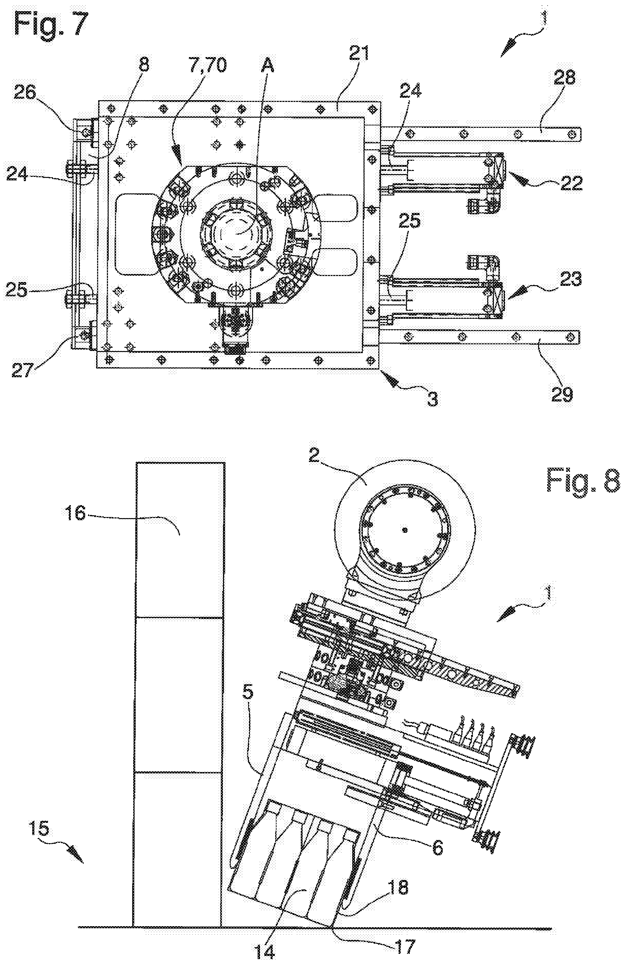

In fact, as clearly visible in Figure 8, if the loading phase of the shrink-wrapped pack 14 is performed carefully by arranging the group 1, 2, 4 so that the jaw 5 closest to the wall 16 is the frontal one, it is clear that the vision unit 8, 9 can not strike the wall 16 and can not cause the fall of products making it up.

The load of the shrink-wrapped pack 14 can be performed by placing it first in an inclined configuration, wherein its perimeter sides are oblique with respect to the wall 16, and wherein it contacts the pallet 15 only along a corner 17 thereof defined in correspondence of the lower edge of the rear side 18 (the furthest from the front plane P), in such a way that the corner 17 is substantially parallel to the wall 16.

After that, the shrink-wrapped pack 14 is made to rotate towards the wall 16, to be arranged with the perimeter sides parallel to the wall 16 and rest freely in said loading position.

In any case, the arrangement of the luminous panel 8 in the rest position must be suitably chosen by the person skilled in the art, depending on the configuration of the robot, the joint 2, the gripper 4 and the type of product being handled, so that the panel 8 does not contact the wall 16 when laying the shrink-wrapped pack 14 or other product on the destination pallet 15.

In detail, the frame 3 can be advantageously provided with an inner housing 19 able to receive the vision unit 8, 9, when it is in the rest position.

In this case, the unit 8, 9 can be mounted concealed in the frame 3, namely that, in the rest position, the panel 8 and the camera 9 are contained substantially entirely in the housing 19 of frame 3 (see, e.g. Figure 1).

This measure is particularly advantageous because it allows to reduce dimensions to a minimum, at least in front of the proposed appliance 1, especially if implemented together (and in synergy) with the measure of positioning the camera 9 on board of the luminous panel 8.

In particular, the frame 3 may generally have a parallelepiped shape and a box-shaped configuration, and may comprise two substantially plate-shaped, parallel and superimposed elements 20, 21, which are placed at a reciprocal distance such as to define, between them, said housing 19.

In particular, these elements are perpendicular to said axis A, and are arranged so that one of these elements, the upper one, defines the ceiling 20 of the frame 3 and is secured to the joint 2 mentioned several times, while the other element defines the bottom 21 of the frame and is secured to said automatic tool-changing device 7, 70.

In this case, the lighting panel 8 is accommodated in the housing 19, parallel to the ceiling 20 and to the bottom.

For this purpose, the frame 3 may have at least the front thick side open, to allow the entry and exit of the vision unit 8, 9 into/from the housing 19 preferably by translation.

For this purpose, as mentioned above, the proposed appliance 1 comprises movement means 22, 23, 26, 27 for shifting the vision unit 8, 9 between the work position and the rest position.

The movement means may comprise at least a pneumatic cylinder 22, 23 (but preferably two, as shown in the figures) mounted on the frame 3, having a stem 24, 25, the distal and front extremity of which is fixed to the lighting panel 8 (see Figures 2, 3, 4 and 7).

Furthermore, the movement means may comprise at least a linear guide 26, 27 to cooperate with the cylinder 22, 23, mounted between the frame 3 and the panel 8, and able to constrain the latter in its translational motion.

In detail, two guides 26, 27 may be provided which also have a bearing function.

In fact, to the rear of panel 8 may be fixed two members 28, 29 substantially coplanar to it, preferably prong-shaped.

The rails 26, 27 of the guides may be fastened both above the panel 3 and above the prongs 28, 29, connecting them at the top. The rails 26, 27, the panel 3 and the prongs 28, 29 connected this way, define a slide between them which is mounted slidably on the frame 3, so as to be supported by the frame itself.

In particular, the rails 26, 27 can engage slidably shoes 30 fixed to the frame.

In this case, also the rear thick side of the frame 3 is preferably open, so as to allow the free sliding of said prongs 28, 29 whose length may not be contained in the above housing 19.

It has been found, in practice, how the described invention achieves the intended objects and in particular the fact is underlined that it provides a vision appliance 1 that comprises a retractable vision unit 8, 9 which allows to determine the mutual arrangement of the products in a layer of a pallet and allows to load a product on a different pallet even in the presence of walls of products.

## Claims

1. Vision appliance (1) for industrial robots, comprising:
- at least a supporting frame (3), which can be fixed to jointed arm (2) of said robot, and suitable for supporting a grip means (4); and
- a vision unit (8, 9) which includes at least an image acquisition device (9) and at least a lighting device (8);
**characterized in that**:
- said unit (8, 9) is retractably mounted on said frame (3) and is moveable between a work position in which it protrudes from said frame (3), so as to define the maximum perimeter dimensions of said appliance (1), and a rest position in which it defines the minimum perimeter dimensions of said appliance (1);
- said frame (3) has an inner housing able to receive said unit (8, 9) in said rest position and comprises two substantially plate-shaped and parallel elements (20, 21), placed at a reciprocal distance such as to define said housing (19); and
- said appliance (1) comprises movement means (22, 23, 26, 27) for translating said unit (8, 9) between said work position and said rest position which are suitable for translating said unit (8, 9) in a plane parallel to said elements (20, 21).

2. Appliance (1) according to claim 1, **characterized in that** said acquisition device (9) is mounted on board of said lighting device (8).

3. Appliance (1) according to one or more of the preceding claims, **characterized in that** said lighting device comprises at least a luminous panel (8).

4. Appliance (1) according to one or more of the preceding claims, **characterized in that** said acquisition device comprises at least a camera (9).

5. Appliance (1) according to claims 3 and 4, **characterized in that** said panel comprises a seat (11) which houses said camera (9).

6. Appliance (1) according to claim 5, **characterized in that** said seat (11) is arranged central to the panel (8).

7. Appliance (1) according to one or more of the preceding claims, **characterised in that** said movement means (22, 23, 26, 27) comprise at least a pneumatic cylinder (22, 23) mounted on said frame (3), having a stem (24, 25) the distal extremity of which is fixed to said lighting device (8).

8. Appliance (1) according to one or more of the preceding claims, **characterized in that** said movement means (22, 23, 26, 27) comprise at least a linear guide (26, 27), mounted between said frame (3) and said lighting device (8).

9. Appliance (1) according to one or more of the preceding claims, **characterized in that** it comprises, fixed below the frame (3), an automatic tool-changing device (7, 70) for robots.

## Patentansprüche

1. Sichtgerät (1) für Industrieroboter, umfassend:
mindestens einen Stützrahmen (3), der an einem gelenkigen Arm (2) des Roboters befestigt werden kann und geeignet ist, ein Greifmittel (4) zu tragen;
und
eine Sichteinheit (8, 9), die mindestens eine Bilderfassungsvorrichtung (9) und mindestens eine Beleuchtungsvorrichtung aufweist (8);
**dadurch gekennzeichnet, dass**:
die Einheit (8, 9) auf dem Rahmen (3) einziehbar montiert und zwischen einer Arbeitsstellung, in der sie von dem Rahmen (3) vorsteht und so die maximale Umfangfangbemaßung des Geräts (1) definiert, und einer Ruhestellung, in der sie die minimale Umfangbemaßung des Geräts (1) definiert, beweglich ist;
der Rahmen (3) ein inneres Gehäuse aufweist, das die Einheit (8, 9) in der Ruhestellung aufnehmen kann und zwei im Wesentlichen plattenförmige und parallele Elemente (20, 21) umfasst, die in einem gegenseitigen Abstand derart platziert sind, dass sie das Gehäuse (19) definieren; und
das Gerät (1) Bewegungsmittel (22, 23, 26, 27) zum Versetzen der Einheit (8, 9) zwischen der Arbeitsstellung und der Ruhestellung umfasst, die geeignet sind, die Einheit (8, 9) in einer Ebene parallel zu den Elementen (20, 21) zu versetzen.

2. Gerät (1) nach Anspruch 1, **dadurch gekennzeichnet, dass** die Erfassungsvorrichtung (9) an Bord der Beleuchtungsvorrichtung (8) montiert ist.

3. Gerät (1) nach einem oder mehreren der vorhergehenden Ansprüche, **dadurch gekennzeichnet, dass** die Beleuchtungsvorrichtung mindestens ein Lichtpaneel (8) umfasst.

4. Gerät (1) nach einem oder mehreren der vorhergehenden Ansprüche, **dadurch gekennzeichnet, dass** die Erfassungsvorrichtung mindestens eine Kamera (9) umfasst.

5. Gerät (1) nach Anspruch 3 und 4, **dadurch gekennzeichnet, dass** das Paneel eine Aufnahme (11) umfasst, die die Kamera (9) aufnimmt.

6. Gerät (1) nach Anspruch 5, **dadurch gekennzeichnet, dass** die Aufnahme (11) mittig zum Paneel (8) angeordnet ist.

7. Gerät (1) nach einem oder mehreren der vorhergehenden Ansprüche, **dadurch gekennzeichnet, dass** die Bewegungsmittel (22, 23, 26, 27) mindestens einen Pneumatikzylinder (22, 23) umfassen, der auf dem Rahmen (3) montiert ist und einen Schaft (24, 25) aufweist, dessen distales Ende an der Beleuchtungsvorrichtung (8) befestigt ist.

8. Gerät (1) nach einem oder mehreren der vorhergehenden Ansprüche, **dadurch gekennzeichnet, dass** die Bewegungsmittel (22, 23, 26, 27) mindestens eine lineare Führung (26, 27) umfassen, die zwischen dem Rahmen (3) und der Beleuchtungsvorrichtung (8) montiert ist.

9. Gerät (1) nach einem oder mehreren der vorhergehenden Ansprüche, **dadurch gekennzeichnet, dass** es eine automatische Werkzeugwechselvorrichtung (7, 70) für Roboter umfasst, die unter dem Rahmen (3) befestigt ist.

## Revendications

1. Appareil de vision (1) pour robots industriels, comprenant :
- au moins un cadre de support (3) qui peut être fixé à un bras articulé (2) dudit robot, et apte à supporter un moyen de préhension (4) ; et
- une unité de vision (8, 9) qui comprend au moins un dispositif d'acquisition d'images (9) et au moins un dispositif d'éclairage (8) ;
**caractérisé en ce que** :
- ladite unité (8, 9) est montée de manière rétractable sur ledit cadre (3) et est mobile entre une position de travail dans laquelle elle fait saillie à partir dudit cadre (3), de manière à définir les dimensions de périmètre maximales dudit appareil (1), et une position de repos dans laquelle elle définit les dimensions de périmètre minimales dudit appareil (1) ;
- ledit cadre (3) comporte un logement interne pouvant recevoir ladite unité (8, 9) dans ladite position de repos et comprend deux éléments (20, 21) sensiblement en forme de plaque et parallèles, placés à distance réciproque de manière à définir ledit logement (19) ; et
- ledit appareil (1) comprend des moyens de déplacement (22, 23, 26, 27) permettant d'opérer la translation de ladite unité (8, 9) entre ladite position de travail et ladite position de repos et qui sont aptes à opérer la translation de ladite unité (8, 9) dans un plan parallèle auxdits éléments (20, 21).

2. Appareil (1) selon la revendication 1, **caractérisé en ce que** ledit dispositif d'acquisition (9) est monté à bord dudit dispositif d'éclairage (8).

3. Appareil (1) selon une ou plusieurs des revendications précédentes, **caractérisé en ce que** ledit dispositif d'éclairage comprend au moins un panneau lumineux (8).

4. Appareil (1) selon une ou plusieurs des revendications précédentes, **caractérisé en ce que** ledit dispositif d'acquisition comprend au moins une caméra (9).

5. Appareil (1) selon les revendications 3 et 4, **caractérisé en ce que** ledit panneau comprend un siège (11) qui abrite ladite caméra (9).

6. Appareil (1) selon la revendication 5, **caractérisé en ce que** ledit siège (11) est agencé au centre du panneau (8).

7. Appareil (1) selon une ou plusieurs des revendications précédentes, **caractérisé en ce que** lesdits moyens de déplacement (22, 23, 26, 27) comprennent au moins un cylindre pneumatique (22, 23) monté sur ledit cadre (3), ayant une tige (24, 25) dont l'extrémité distale est fixée audit dispositif d'éclairage (8).

8. Appareil (1) selon une ou plusieurs des revendications précédentes, **caractérisé en ce que** lesdits moyens de déplacement (22, 23, 26, 27) comprennent au moins un guide linéaire (26, 27), monté entre ledit cadre (3) et ledit dispositif d'éclairage (8).

9. Appareil (1) selon une ou plusieurs des revendications précédentes, **caractérisé en ce qu'**il comprend, fixé sous le cadre (3), un dispositif de changement automatique d'outil (7, 70) pour des robots.
